# EUROPEAN PATENT SPECIFICATION

(11) **EP 4 287 348 B1**
(45) Date of publication and mention of the grant of the patent: **21.10.2026**
(21) Application number: 22896177.7
(22) Date of filing: 22.11.2022
(51) Int. Cl.: H01M 10/42, H01M 4/04, H01M 10/04, B05C 9/04, B05C 9/14, B05C 9/12, B05D 3/06, H01M 4/13, H01M 4/66, H01M 10/0585, B05C 5/02, B05C 11/02, H01M 10/052

(54) **SINGLE-SIDED ELECTRODE, ELECTRODE ASSEMBLY INCLUDING SAME, AND SINGLE-SIDED ELECTRODE MANUFACTURING METHOD**
EINSEITIGE ELEKTRODE, ELEKTRODENANORDNUNG DAMIT UND VERFAHREN ZUR HERSTELLUNG EINER EINSEITIGEN ELEKTRODE
ÉLECTRODE À UN SEUL CÔTÉ, ENSEMBLE ÉLECTRODE LA COMPRENANT, ET PROCÉDÉ DE FABRICATION D'UNE ÉLECTRODE À UN SEUL CÔTÉ

(30) Priority: 22.11.2021 KR 20210161634
(43) Date of publication of application: 06.12.2023
(73) Proprietor: LG Energy Solution, Ltd., Seoul 07335 (KR)
(72) Inventor: JEONG, Hyeok, Daejeon 34122 (KR); JANG, Seokhoon, Daejeon 34122 (KR); JUNG, Su Taek, Daejeon 34122 (KR); HWANG, Won Pill, Daejeon 34122 (KR); BAE, Sangho, Daejeon 34122 (KR)
(74) Representative: Plasseraud IP
(86) International application number: PCT/KR2022/018528
(87) International publication number: WO 2023/090980

(56) References cited:
- CN-A- 105 449 262
- JP-A- 2020 518 100
- KR-A- 20150 083 281
- KR-A- 20170 087 315
- KR-A- 20180 085 139
- KR-A- 20180 085 139
- KR-A- 20200 059 001
- KR-A- 20200 118 379
- US-A1- 2019 081 317
- US-A1- 2020 014 031

## Description

### [TECHNICAL FIELD]

The present disclosure relates to a single-sided electrode, an electrode assembly including the same, and a single-sided electrode manufacturing apparatus, and more specifically, to a single-sided electrode having controlled curl, an electrode assembly including the same, and a single-sided electrode manufacturing apparatus.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery is classified into a cylindrical battery where an electrode assembly is mounted in a cylindrical metal can, a prismatic battery where an electrode assembly is mounted in a prismatic metal can, and a pouch-type battery where an electrode assembly is mounted into a pouch type case formed of an aluminum laminate sheet. Here, the electrode assembly mounted in the battery case is an electricity-generating device enabling charge and discharge that has a structure of a cathode, an anode, and a separator interposed between the cathode and the anode, and is divided into a jelly-roll type in which an electrode assembly including a separator interposed between the cathode and the anode, each made of an active material-coated long sheet, is rolled, and a stack-type in which a plurality of cathodes and a plurality of anodes are stacked in this order in state where a separator is interposed between the cathode and the anode.

Among them, in particular, a pouch-type battery having a structure in which a stack-type or stack/folding-type electrode assembly is mounted in a pouch-type battery case of an aluminum laminate sheet is gradually increasing in its usage amount due to low manufacturing cost, small weight, easy deformation, and the like. KR 2018 0085139 discloses an example of electrode assembly.

Here, in the case of a stack-type electrode assembly, it is common to manufacture a unit cell in advance and then stack the unit cell by a plurality of numbers. More specifically, the unit cell can apply heat and pressure through a laminating device in a state in which the separator-anode-separator-cathode are alternately laminated in this order, so that each component can be fixed to each other.

However, a stack-type electrode assembly is generally a half-cell to secure cell safety and has a structure in which an anode is stacked on the uppermost stage. However, in this case, there is a problem in that energy density is lowered due to the half cell. Accordingly, there is a need to develop an electrode assembly that can secure cell stability while increasing energy density by omitting arrangement of a half-cell on the uppermost stage in the stack-type electrode assembly.

US 2020/014031 discloses a one-sided electrode. KR 2020 0118379 disclose a negative electrode. US 2019/081317 discloses a dual sided coating system. CN 105 449 262 discloses a a flexible lithium ion battery

### [DETAILED DESCRIPTION OF THE INVENTION]

### [Technical Problem]

It is an object of the present disclosure to provide a single-sided electrode having controlled curl, an electrode assembly including the same, and single-sided electrode manufacturing apparatus.

The objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a single-sided electrode comprising: an electrode current collector; an active material layer located on one surface of the electrode current collector; and a coating layer located on the other surface of the electrode current collector, wherein a thickness of the coating layer is smaller than a thickness of the active material layer.

Specifically, the thickness of the coating layer may be 26% or more and 49% or less of the thickness of the active material layer.

The coating layer is made from a coating composition which comprises,
a) at least one acrylate selected from the group consisting of a monofunctional acrylate, a bifunctional acrylate, and a trifunctional acrylate, and
b) a glass fiber or an epoxy-based resin.

More specifically, the coating layer may be made from a coating composition in which a content of the trifunctional acrylate is 41% by weight or more and 69% by weight or less based on the total weight of the coating composition,
a content of the monofunctional acrylate and the bifunctional acrylate is 16% by weight or more and 30% by weight or less based on the total weight of the coating composition, and
a content of the glass fiber is 13% by weight or more and 29% by weight or less based on the total weight of the coating composition.

Alternatively, the coating layer may be made from a coating composition in which a content of the trifunctional acrylate is 10% by weight or more and 14% by weight or less based on the total weight of the coating composition,
a content of the monofunctional acrylate is 5% by weight or more and 7% by weight or less based on the total weight of the coating composition, and
the epoxy-based resin is contained in an amount of 4 to 5 times the total content of the trifunctional acrylate and the monofunctional acrylate.

Furthermore, the coating composition further comprises an initiator and an additive, and the initiator is a photo-initiator, or a mixture of a photo-initiator and a thermal initiator.

At this time, in the coating composition, a total content of the initiator may be 1% by weight or more and 4% by weight or less based on the total weight of the coating composition, wherein the photo-initiator may be contained in an amount of 30% by weight to 100% by weight based on the total weight of the initiator, and a content of the additive may be 0.1% by weight or more and 1% by weight or less based on the total weight of the coating composition.

A deviation of the degree of curling of the single-sided electrode including such a coating layer may be 0 mm or more and 5 mm or less.

According to another embodiment of the present disclosure, there is provided an electrode assembly comprising the above-mentioned single-sided electrode, wherein the electrode assembly is configured such that a double-sided cathode, a double-sided anode, and a separator interposed between the double-sided cathode and the double-sided anode are repeatedly laminated, wherein the single-sided electrode is disposed via the separator so that the double-sided anode or the double-sided cathode located in at least one of the uppermost and lowermost stages of the electrode assembly and the active material layer of the single-sided electrode face each other, wherein the double-sided cathode is configured such that a cathode active material layer is located on both surfaces of the cathode current collector, respectively, and wherein the double-sided anode is configured such that anode active material layer is located on both surfaces of an anode current collector, respectively.

Wherein, the single-sided electrode may have a polarity opposite to that of the double-sided anode or the double-sided cathode having a separator interposed therebetween.

According to yet another embodiment of the present disclosure, there is provided a single-sided electrode manufacturing apparatus which manufactures the above-mentioned single-sided electrode, the apparatus comprising: a supply roller that supplies an electrode current collector; a first coating device that applies an active material composition to one surface of the electrode current collector to form an active material layer on one surface of the electrode current collector; and a second coating device that applies the coating composition to the other surface of the electrode current collector to form a coating layer on the other surface of the electrode current collector.

The electrode current collector, which is formed with the active material layer supplied from the first coating device, may be dried.

The single-sided electrode manufacturing apparatus may further comprise a pair of rolling rollers that roll the upper and lower surfaces of the electrode current collector on which the dried active material layer is formed.

The coating layer of the electrode current collector supplied from the second coating device may be primarily cured by irradiation of ultraviolet (UV).

At this time, the irradiation dose of the ultraviolet (UV) may be 0.5 J/cm² or more and 1 J/cm² or less.

Furthermore, the single-sided electrode manufacturing apparatus may further comprise a heat treatment device in which the primarily cured coating layer is subjected to additional heat treatment and secondarily cured.

At this time, the additional heat treatment may be performed at 100 to 150°C for 10 minutes to 30 minutes or less.

### [BRIEF DESCRIPTION OF THE DRAWINGS]

Fig. 1 is a diagram showing a single-sided electrode according to one embodiment of the present disclosure;
Fig. 2 is a diagram showing an electrode assembly according to another embodiment of the present disclosure;
Fig. 3 is a diagram showing an electrode assembly according to Comparative Example;
Fig. 4 is a diagram showing an apparatus for manufacturing a single-sided electrode according to another embodiment of the present disclosure; and
Fig. 5 is a diagram showing measurement of the degree of curling in Experimental Example.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

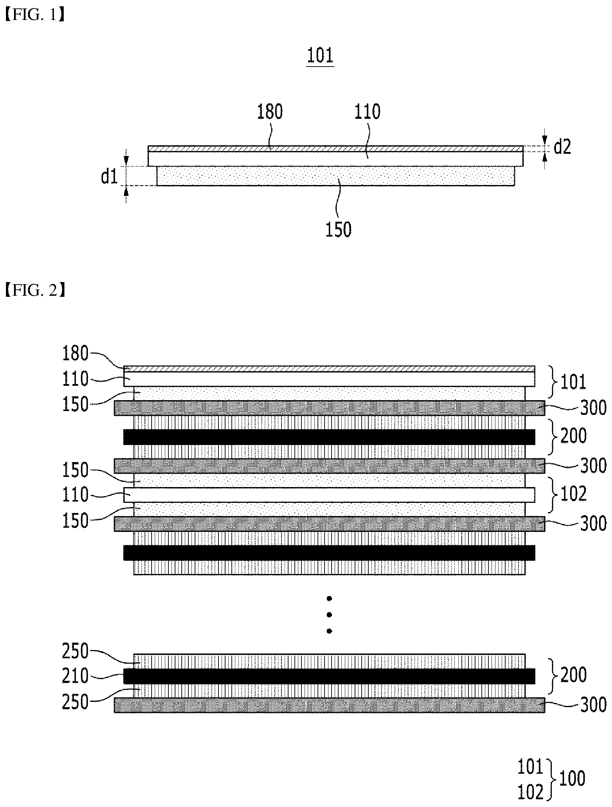

Fig. 1 is a diagram showing a single-sided electrode according to one embodiment of the present disclosure.

Referring to Fig. 1, the single-sided electrode 101 according to one embodiment of the present disclosure includes an electrode current collector 110; an active material layer 150 located on one surface of the electrode current collector 110; and a coating layer 180 located on the other surface of the electrode current collector 110.

Here, the single-sided electrode 101 may refer to an electrode in which the active material layer 150 is formed on only one surface among both surfaces of the electrode current collector 110. Also, the single-sided electrode 101 may be a single-sided cathode or a single-sided anode.

In one example, when the single-sided electrode 101 is a single-sided cathode, the electrode current collector 110 may be a cathode current collector, and the active material layer 150 may be a cathode active material layer. In another example, when the single-sided electrode 101 is a single-sided anode, the electrode current collector 110 may be an anode current collector, and the active material layer 150 may be an anode active material layer.

Below, the single-sided electrode 101 will be described as a single-sided cathode, but is not limited thereto, and the single-sided anode can also be described similarly.

The thickness of the coating layer 180 formed to exhibit the effects of the present disclosure is smaller than the thickness of the active material layer 150. Specifically, the thickness of the coating layer 180 may be 26% or more and 49% or less relative to the thickness of the active material layer 150. More specifically, the thickness of the coating layer 180 may be 25% or more and 45% or less relative to the thickness of the active material layer 150. Most specifically, the thickness of the coating layer 180 may be 30% or more and 40% or less relative to the thickness of the active material layer 150.

Thereby, the thickness of the coating layer 180 included in the single-sided electrode 101 has a thickness within the above-mentioned range, so that the degree of curling of the single-sided electrode 101 can be appropriately controlled, and also the single-sided electrode 101 can be easily stacked together with other cathodes and anodes in an electrode assembly unit.

Unlike the same, when the thickness of the coating layer 180 included in the single-sided electrode 101 is too large or small beyond the above-mentioned range, the degree of curling of the single-sided electrode 101 becomes excessive, which causes a problem that it is impossible to stack together with other cathode and anodes in an electrode assembly unit.

Here, the coating layer 180 is made from a coating composition which comprises a) at least one acrylate selected from the group consisting of a monofunctional acrylate, a bifunctional acrylate, and a trifunctional acrylate, and b) a glass fiber or an epoxy-based resin.

In one example, the monofunctional acrylate and the bifunctional acrylate may be at least one material selected from the group consisting of HDDA (Hexanediol Diacrylate), 2-HEA (2-hydroxyethyl acrylate), 9-EGDA (Ethylene Glycol Diacetate), TTEGDA (Tetra (Ethylene Glycol) Diacrylate), and IOA (Isooctyl Acrylate). However, the monofunctional acrylate and the bifunctional acrylate are not limited thereto, and other monofunctional and/or bifunctional acrylates that can be used in secondary batteries known in the art can also be included in the present embodiment.

In one example, the trifunctional acrylate may be at least one material selected from the group consisting of TMPTA (trimethylolpropane triacrylate) and PTA (pentaerythritol triacrylate). However, the trifunctional acrylate is not limited thereto, and other trifunctional acrylates that can be used in secondary batteries known in the art can also be included in the present embodiment.

In one example, the glass fiber may be CRC (cellulose fiber reinforced cement)-12. However, the glass fibers are not limited thereto, and other glass fibers that can be used in secondary batteries known in the art can also be included in the present embodiment.

In one example, the epoxy-based resin may be one or more materials selected from the group consisting of a trifunctional epoxy composite resin having an epoxy equivalent of 135 to 150 g/eq, and (3',4'-epoxycyclohexane)methyl 3,4-epoxycyclohexylcarboxylate. Specifically, YH-300 (Kukdo Chemical) can be used as the trifunctional epoxy composite resin, and Celloxide 2021P (Daicel) can be used as the (3',4'-epoxycyclohexane)methyl 3,4-epoxycyclohexylcarboxylate. However, the epoxy-based resin is not limited thereto, and other epoxy-based resins that can be used in secondary batteries known in the art can also be included in the present embodiment.

More specifically, in one example, the coating layer may be made from a coating composition which comprises the trifunctional acrylate in an amount of 41% by weight or more and 69% by weight or less based on the total weight of the coating composition, and the monofunctional acrylate and the bifunctional acrylate in an amount of 16% by weight or more and 30% by weight or less based on the total weight of the coating composition.

Specifically, the content of the trifunctional acrylate may be 43% by weight or more and 65% by weight or less based on the total weight of the coating composition, and the content of the monofunctional acrylate and the bifunctional acrylate may be 16% by weight or more and 29% by weight or less based on the total weight of the coating composition. In one example, the content of the trifunctional acrylate may be 45% by weight or more and 60% by weight or less based on the total weight of the coating composition, and the content of the monofunctional acrylate and the bifunctional acrylate may be 18% by weight or more and 28% by weight or less based on the total weight of the coating composition.

Accordingly, in the coating composition, the contents of the trifunctional acrylate, the monofunctional acrylate and the bifunctional acrylate are included within the above range, so that the degree of curling of the single-sided electrode 101 including the coating layer 180 made from the coating composition can be appropriately controlled, and also the single-sided electrode 101 can be easily stacked together with other cathodes and anodes in an electrode assembly unit.

Unlike the same, in the coating composition, when the content of the trifunctional acrylate, the monofunctional acrylate and the bifunctional acrylate is included in an excessively large or small amount outside the above-described range, there is a problem that the degree of curling of the single-sided electrode 101 including the coating layer 180 made from the coating composition becomes excessive, which makes it impossible to stack together with other cathodes and anodes in an electrode assembly unit.

In the coating composition, the content of the glass fiber may be 13% by weight or more and 29% by weight or less based on the total weight of the coating composition. Specifically, the content of the glass fiber may be 14% by weight or more and 28% by weight or less based on the total weight of the coating composition. In one example, the content of the glass fiber may be 15% by weight or more and 27% by weight or less based on the total weight of the coating composition.

Thereby, in the coating composition, the content of the glass fiber is included within the above-mentioned range, so that the degree of curling of the single-sided electrode 101 including the coating layer 180 made from the coating composition can be appropriately controlled, and also the single-sided electrode 101 can be easily stacked together with other cathodes and anodes in an electrode assembly unit.

Unlike the same, in the coating composition, when the content of the glass fibers is included in an excessively large or small amount outside the above-mentioned range, there is a problem that the degree of curling of the single-sided electrode 101 including the coating layer 180 made from the coating composition becomes excessive, making it impossible to stack together with other cathodes and anodes in an electrode assembly unit.

Meanwhile, in another example, the coating layer may be made from a coating composition in which a content of the trifunctional acrylate is 10% by weight or more and 14% by weight or less based on the total weight of the coating composition, a content of the monofunctional acrylate is 5% by weight or more and 7% by weight or less based on the total weight of the coating composition, and the epoxy-based resin is contained in an amount of 4 to 5 times the total content of the trifunctional acrylate and the monofunctional acrylate.

Specifically, the content of the trifunctional acrylate is 10% by weight or more and 12% by weight or less based on the total weight of the coating composition, the content of the monofunctional acrylate may be 6% by weight or more and 7% by weight or less based on the total weight of the coating composition, and the epoxy-based resin may be contained in an amount of about 5 times the total content of the trifunctional acrylate and the monofunctional acrylate.

Thereby, in the coating composition, the ratio of the content of the trifunctional acrylate, the monofunctional acrylate, and the bifunctional acrylate, and the content of the epoxy resin is included within the above-mentioned range, so that the degree of curling of the single-sided electrode 101 including the coating layer 180 made from the coating composition can be appropriately controlled, and also the single-sided electrode 101 can be easily stacked together with other anodes and cathodes in an electrode assembly unit.

Unlike the same, in the coating composition, when the content of the trifunctional acrylate and the monofunctional acrylate is outside the above-mentioned range, or the content ratio of the epoxy-based resin is excessively large or small, there is a problem that the degree of curling of the single-sided electrode 101 including the coating layer 180 made from the coating composition becomes excessive, making it impossible to stack together with other cathodes and anodes in the electrode assembly unit.

Further, in the coating layer 180, the coating composition further includes an initiator and an additive, wherein the initiator may be a photo-initiator or a mixture of a photo-initiator and a thermal initiator. Here, the additive may mean a leveling agent, a surfactant, and the like.

In one example, the photo-initiator may be Darocur TPO (Diphenyl (2,4,6-trimethylbenzoyl) - phosphine oxide). However, the photo-initiator is not limited thereto, and other commonly used photo-initiators can also be included in the present embodiment.

The thermal initiator may be, for example, SI-110L (Sanshin Chemical). However, the thermal initiator is not limited thereto, and other commonly used thermal initiators can also be included in the present embodiment.

In one example, the additive may be at least one material selected from the group consisting of RS-75 (DIC Company) and F477 (DIC Company). However, the additive is not limited thereto, and other commonly used additives can also be included in the present embodiment.

In the coating composition, the total content of the initiator may be 1% by weight or more and 4% by weight or less based on the total weight of the coating composition, and the content of the additive may be 0.1% by weight or more and 1% by weight or less based on the total weight of the coating composition. More specifically, the total content of the initiator is 1.5% by weight or more and 3% by weight or less based on the total weight of the coating composition, wherein the photo-initiator can be contained in an amount of 30% to 100% by weight based on the total weight of the initiator.

Thereby, in the coating composition, the content of the initiator and the additive is included within the above-mentioned range, so that the degree of curling of the single-sided electrode 101 including the coating layer 180 made from the coating composition can be appropriately controlled, and also the single-sided electrode 101 can be easily stacked together with other cathodes and anodes in an electrode assembly unit.

Unlike the same, in the coating composition, when the content of the initiator and the additive is included in an excessively large or small amount outside the above-mentioned range, there is a problem that the degree of curling of the single-sided electrode 101 including the coating layer 180 made from the coating composition becomes excessive, making it impossible to stack together with other cathodes and anodes in an electrode assembly unit.

The deviation of the degree of curling of the single-sided electrode 101 manufactured as described above may be 0 mm or more and 5 mm or less. Specifically, the deviation of the degree of curling of the single-sided electrode 101 may be 0 mm or more and 4.5 mm or less. In one example, the deviation of the degree of curling of the single-sided electrode 101 may be 0 mm or more and 4 mm or less, and most specifically, 0 mm to 3 mm.

Thereby, the degree of curling of the single-sided electrode 101 has a deviation within the above range and thus, can be easily stacked together with other cathodes and anodes in an electrode assembly unit.

Unlike the same, when the degree of curling of the single-sided electrode 101 is outside the above-mentioned range and has an excessively large deviation, there is a problem that it is impossible to stack together with other cathodes and anodes in the electrode assembly unit.

Fig. 2 is a diagram showing an electrode assembly according to another embodiment of the present disclosure.

Referring to Fig. 2, an electrode assembly according to another embodiment of the present disclosure includes a single-sided electrode 101. More specifically, the electrode assembly may be configured such that the double-sided cathode 102, the double-sided anode 200, and the separator 300 interposed between the double-sided cathode 102 and the double-sided anode 200 are repeatedly stacked. Here, the double-sided cathode 102 is configured such that cathode material layers 150 are located on both surfaces of the cathode current collector 110, and the double-sided anode electrode 200 is configured such that anode active material layers 250 are respectively located on both sides of the anode current collector 210.

The cathode current collector 110 is not particularly limited as long as it has conductivity without causing a chemical change in the battery. For example, stainless steel, aluminum, nickel, titanium, sintered carbon, and a material formed by surface-treating a surface of aluminum or stainless steel with carbon, nickel, titanium, silver, or the like can be used.

The cathode active material layer 150 can be manufactured in a form in which a cathode slurry containing a cathode active material is attached or applied onto the cathode current collector 110, and the cathode slurry may further include a conductive material and a polymer material in addition to the cathode active material.

The cathode active material may include, for example, lithium cobalt oxide (LiCoO₂), lithium nickel oxide (LiNiO₂); lithium manganese oxide; lithium copper oxide (Li₂CuO₂); vanadium oxide; a Ni-site type lithium nickel oxide; lithium manganese composite oxide; lithium manganese composite oxide with a spinel structure; LiMn₂O₄ in which a part of Li in the chemical formula is substituted with an alkaline earth metal ion; a disulfide compound; Fe₂(MoO₄)₃ and the like.

The anode current collector 210 is not particularly limited as long as it has high conductivity without causing a chemical change in the battery. For example, copper, stainless steel, aluminum, nickel, titanium, calcined carbon, a material formed by surface-treating a surface of copper or stainless steel with carbon, nickel, titanium, silver, or the like, aluminum-cadmium alloy, and the like can be used.

The anode active material layer 250 can be manufactured in a form in which an anode slurry containing an anode active material is attached or applied onto the anode current collector 210, and the anode slurry may further include a conductive material and a polymer material in addition to the anode active material.

As the anode active material, a common anode active material for lithium secondary batteries in the art may be used. In one example, a material such as lithium metal, lithium alloy, petroleum cork, activated carbon, graphite, silicon, tin, metal oxide or other carbons can be used.

The separator 300 separates the double-sided cathode 102 and the double-sided anode 200, the single-sided electrode 101 and the double-sided anode 200 or cathode 102, respectively, and provides a moving passage of lithium ions. Any separator can be used without particular limitation as long as it is generally used as a separator in a lithium secondary battery. Particularly, it is preferable that the separator has a low resistance against the ion migration of the electrolyte and has an excellent ability to impregnate the electrolyte.

Here, the single-sided electrode 101 may be located at the uppermost stage or the lowermost stage of the electrode assembly. More specifically, the single-sided electrode 101 may be disposed with the separator 300 interposed therebetween so that a double-sided anode 200 or a double-sided cathode 102 located on at least one of the uppermost and lowermost stages of the electrode assembly and the active material layer of the single-sided electrode 101 faces each other.

In one example, as shown in Fig. 2, the single-sided electrode 101 may be disposed at a position where the separator 300 is interposed therebetween so that the double-sided anode 200 located at the uppermost stage of the electrode assembly and the active material layer face each other. However, the present disclosure is not limited thereto, and the single-sided electrode 101 may be disposed at a position where the separator 300 is interposed therebetween so that the double-sided anode 200 or the double-sided cathode 102 located at the lowermost stage of the electrode assembly and the active material layer face each other.

Further, as shown in Fig. 2, the single-sided electrode 101 may be disposed in a direction in which the active material layer 150 included in the single-sided electrode 101 is in contact with the inner separator 300.

Moreover, the single-sided electrode 101 may have a polarity opposite to that of the double-sided anode 200 or the double-sided cathode 102 having a separator 300 interposed therebetween. More specifically, as shown in Fig. 2, when the single-sided electrode 101 is a single-sided cathode, the single-sided electrode 101 may be disposed at a position interposed between the double-sided cathode 200 and the separator 300 located on at least one of the uppermost and lowermost stages of the electrode assembly. Conversely, when the single-sided electrode 101 is a single-sided anode, the single-sided electrode 101 may be disposed at a position interposed between the double-sided cathode 102 and the separator 300 located on at least one of the uppermost and lowermost stages of the electrode assembly.

Further, although not shown in Fig. 2, a separator 300 in contact with the coating layer 180 of the single-sided electrode 101 located at the uppermost and/or lowermost stages of the electrode assembly may be further included.

Thereby, the electrode assembly according to the present embodiment is configured such that the single-sided electrode 101 is disposed at the uppermost and/or lowermost stages of the electrode assembly, thereby capable of securing cell safety while increasing the energy density of the electrode assembly compared to the prior art.

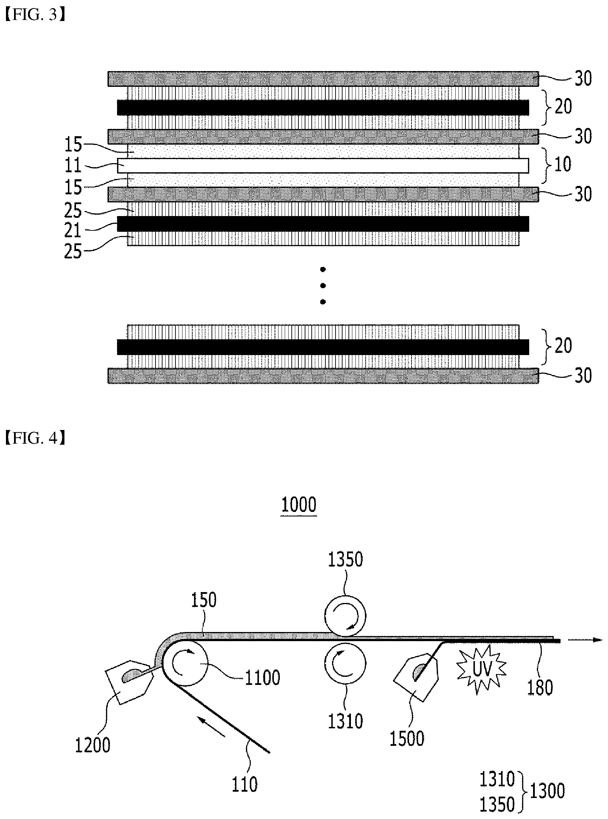

Fig. 3 is a diagram showing an electrode assembly according to Comparative Example.

Referring to Fig. 3, the electrode assembly according to Comparative Example is configured such that a double-sided cathode 10, a double-sided anode 20, and a separator 30 interposed between the double-sided cathode 10 and the double-sided anode 20 are repeatedly laminated. At this time, in the double-sided anode 20 at the uppermost and lowermost stages of the electrode assembly, the outermost active material layer does not participate in the reaction. Thereby, as the double-sided anode 20 is disposed at the uppermost and lowermost stages of the electrode assembly, the cell safety can be secured, but the corresponding double-sided anodes 20 do not participate in the reaction, which causes a problem that the energy density of the electrode assembly is lowered.

Unlike the same, the electrode assembly according to the present embodiment is configured such that the single-sided electrode 101 is disposed at the uppermost and/or lowermost stages of the electrode assembly as described above, thereby capable of securing the cell safety while increasing the energy density of the electrode assembly compared to the prior art.

Fig. 4 is a diagram showing an apparatus for manufacturing a single-sided electrode according to another embodiment of the present disclosure.

Referring to Fig. 4, the single-sided electrode manufacturing apparatus 1000 according to another embodiment of the present disclosure is a single-sided electrode manufacturing apparatus that manufactures the single-sided electrode 101. More specifically, the single-sided electrode manufacturing apparatus 1000 according to the present embodiment includes a supply roller 1100 that supplies an electrode current collector 110; a first coating device 1200 that applies an active material composition to one surface of the electrode current collector 110 to form an active material layer 150 on one surface of the electrode current collector 110; and a second coating device 1500 that applies the coating composition to the other surface of the electrode current collector 110 to form a coating layer 180 on the other surface of the electrode current collector 110.

Further, in the single-sided electrode manufacturing apparatus 1000 according to the present embodiment, the electrode current collector 110 formed with the active material layer 150 supplied from the first coating device 1200 may be dried. Here, the single-sided electrode manufacturing apparatus 1000 according to the present embodiment may further include a separate drying device adjacent to the first coating device 1200.

In addition, the single-sided electrode manufacturing apparatus 1000 according to the present embodiment may further include a pair of rolling rollers 1300 that roll the upper and lower surfaces of the electrode current collector 110 on which the dried active material layer 150 is formed. More specifically, the pair of rolling rollers 1300 may include a first rolling roller 1310 located adjacent to the lower portion of the electrode current collector 110 and a second rolling roller 1350 located adjacent to an upper portion of the electrode current collector 110. Here, the first rolling roller 1310 and the second rolling roller 1350 may be disposed in a vertical direction with respect to the electrode current collector 110.

Further, in the single-sided electrode manufacturing apparatus 1000 according to the present embodiment, the coating layer 180 of the electrode current collector 110 supplied from the second coating device 1500 may be primarily cured by irradiation of ultraviolet (UV). In one example, the ultraviolet (UV) may be irradiated by a light source such as an H-bulb. Here, the irradiation dose of the ultraviolet (UV) may be 0.5 J/cm² or more and 1 J/cm² or less.

If the irradiation dose is too larger outside the above range, problems such as cracks in the coating layer may occur due to excessive curing. Conversely, if the irradiation dose is too small, there is a problem that curing cannot be performed well, and thus, the mechanical properties of the coating layer are deteriorated, which is not preferable.

With the configuration described above, the cross-sectional electrode manufacturing apparatus 1000 according to the present embodiment can easily manufacture the single-sided electrode 101 whose degree of curling is controlled.

In addition, although not shown in the figure, the single-sided electrode manufacturing apparatus 1000 may further comprise a heat treatment device in which the primarily cured coating layer 180 is subjected to additional heat treatment and secondarily cured.

If the additional heat treatment is performed, not only a flat single-sided electrode with less curling can be manufactured, but also the interfacial adhesive strength between the coating layer 180 and the electrode current collector 110 can be improved.

At this time, the additional heat treatment may be performed at 100 to 150°C for 10 to 30 minutes or less.

If the heat treatment is performed at the very high temperature or for too long a time outside the above range, it is not effective for curl control, and cracks in the coating layer may occur. Conversely, if the heat treatment is performed at the very low a temperature or for too short a time, the effect due to heat treatment cannot be obtained sufficiently, which is not preferable.

Further, heat treatment is more preferably performed after the primary curing using UV as described above. When heat treatment is performed first, it is difficult to control the curling by UV irradiation, which is performed later, whereas when heat treatment is performed after UV irradiation, the portion where shrinkage in the direction of the coating layer by UV can be alleviated by heat treatment, which makes it easy to control curling.

Hereinafter, the subject matter of the present disclosure will be described with reference to more specific examples. The following examples are for illustrative purposes only and are not intended to limit the scope of the present disclosure.

### <Example 1>

A single-sided cathode was manufactured in which a cathode active material layer having a thickness of 60 um was formed on the upper surface of the aluminum (Al) foil, which is a cathode current collector with a size of 10cm*10cm and a thickness of 15um, and a coating layer having a thickness of 20um was formed on the lower surface of the aluminum foil.

Here, the cathode active material layer was made from a cathode active material slurry obtained by using LiNi_{0.6}Mn_{0.2}Co_{0.2}O₂ as a cathode active material, carbon black as a conductive material, and polyvinylidene fluoride (PVdf) as a binder, respectively, and adding an NMP solvent to a mixture of cathode active material : conductive material : binder in a weight ratio of 96:2:2. In addition, in the single-sided cathode, the cathode active material layer was prepared by applying the cathode active material slurry onto an upper surface of an aluminum foil, followed by drying and rolling.

Further, the coating layer was made from a coating solution obtained by using Miramer M320 (TMPTA) (Miwon Specialty Chemical) as a trifunctional acrylate, Miramer M200 (HDDA) as a mono/bifunctional acrylate, CRC-12 (glass frit) as glass fiber, Darocur TPO (BASF) as a photo-initiator, and F-477 (DIC) as an additive (leveling agent), respectively, and mixing trifunctional acrylate: monofunctional/bifunctional acrylate: glass fiber: photo-initiator: additive in a weight ratio of 50:25:20:5:0.1 or less. In addition, in the single-sided cathode, the coating layer was prepared by applying the coating solution to the lower surface of aluminum foil, followed by UV curing (0.5 J/cm²).

### <Example 2>

A single-sided cathode was manufactured in the same manner as in Example 1, except that in Example 1, the thickness of the coating layer was 25um.

### <Example 3>

A single-sided cathode was manufactured in the same manner as in Example 1, except that in Example 1, a coating solution made by using Miramer M2770 (TTEGDA) as mono/bifunctional acrylate, and RS-75 (DIC) as an additive (leveling agent), and mixing trifunctional acrylate: monofunctional/bifunctional acrylate: glass fiber: photo-initiator: additive in a weight ratio of 50:27:20:2.9:0.1 was used, wherein the thickness of the coating layer had a thickness of 25um.

### <Example 4>

A single-sided cathode was manufactured in the same manner as in Example 3, except that in Example 3, a coating solution made by mixing trifunctional acrylate: monofunctional/bifunctional acrylate: glass fiber: photo-initiator: additive in a weight ratio of 60:22:15:2.9:0.1 was used.

### <Example 5>

A single-sided cathode was manufactured in the same manner as in Example 3, except that in Example 3, a coating solution made by mixing trifunctional acrylate: monofunctional/bifunctional acrylate: glass fiber: photo-initiator: additive in a weight ratio of 60:17:20:2.9:0.1 was used.

### <Comparative Example 1>

A single-sided cathode was manufactured in the same manner as in Example 1, except that in Example 1, the coating layer was not formed.

### <Example 6>

A single-sided cathode was manufactured in the same manner as in Example 1, except that in Example 1, the thickness of the coating layer was 15um.

### <Example 7>

A single-sided cathode was manufactured in the same manner as in Example 1, except that in Example 1, the thickness of the coating layer was 30um.

### <Example 8>

A single-sided cathode was manufactured in the same manner as in Example 1, except that in Example 1, the thickness of the coating layer was 35um.

### <Example 9>

A single-sided cathode was manufactured in the same manner as in Example 3, except that in Example 3, a coating solution made by mixing trifunctional acrylate: monofunctional/bifunctional acrylate: glass fiber: photo-initiator: additive in a weight ratio of 60:30:7:2.9:0.1 was used.

### <Example 10>

A single-sided cathode was manufactured in the same manner as in Example 3, except that in Example 3, a coating solution made by mixing trifunctional acrylate: monofunctional/bifunctional acrylate: glass fiber: photo-initiator: additive in a weight ratio of 50:32:15:2.9:0.1 was used.

### <Example 11>

A single-sided cathode was manufactured in the same manner as in Example 3, except that in Example 3, a coating solution made by mixing trifunctional acrylate: monofunctional/bifunctional acrylate: glass fiber: photo-initiator: additive in a weight ratio of 70:15:12:2.9:0.1 was used.

### <Example 12>

A single-sided cathode was manufactured in the same manner as in Example 3, except that in Example 3, a coating solution made by using Miramer M1084 (IOA) as a mono/bifunctional acrylate, and mixing trifunctional acrylate: mono/bifunctional acrylate: glass fiber: photo-initiator: additive in a weight ratio of 40:40:17:2.9:0.1 was used.

### <Example 13>

A single-sided cathode was manufactured in the same manner as in Example 3, except that in Example 3, a coating solution made by mixing trifunctional acrylate: mono/bifunctional acrylate: glass fiber: photo-initiator: additive in a weight ratio of 50:22:25:2.9:0.1 was used.

### <Example 14>

A single-sided cathode was manufactured in the same manner as in Example 3, except that in Example 3, a coating solution made by mixing trifunctional acrylate: mono/bifunctional acrylate: glass fiber: photo-initiator: additive in a weight ratio of 35:42:20:2.9:0.1 was used.

### <Experimental Example 1 (Measurement of degree of curling, pencil hardness, and permeability according to the thickness of the coating layer)>

For the manufactured Example 1, Example 2, Examples 6 to 8, and Comparative Example 1, the degree of curling and pencil hardness according to the thickness of the coating layer were measured, respectively.

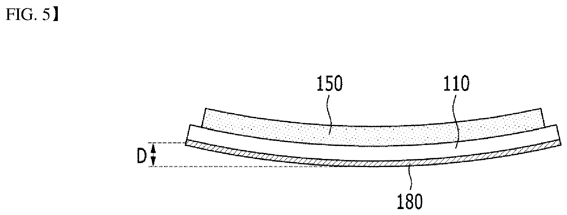

For the measurement of the degree of curling, as shown in Fig. 5, the degree of bending in the (+) or (-) direction with respect to the electrode was determined by measuring the distance (D) between each corner of the single-sided cathode from the bottom surface, and then calculating the average value, and the results are shown in Table 1 below.

Pencil hardness was evaluated according to the Japanese Standard JIS K 5400. In this regard, a pencil hardness meter was reciprocated three times on the coating layer under a load of 0.5 kg to determine the hardness at which no scratches appeared. The results are shown in Table 1 below.

**[Table 1]**

| | Thickness of coating layer (um) | Degree of curling (mm) | Pencil hardness |
|---|---|---|---|
| Example 1 | 20 | -0.9 | 3~4H |
| Example 2 | 25 | 1.2 | 5H |
| Comparative Example 1 | - | -24.8 | <4B |
| Example 6 | 15 | -10.4 | 1H |
| Example 7 | 30 | 6.4 | 5H |
| Example 8 | 35 | 9.9 | 6H |

Referring to Table 1, Examples 1 to 2 and 6 to 8 and Comparative Example 1 include coating layers having the same composition, but differ only in the thickness of each coating layer. At this time, when the thickness of the coating layer is 20um and 25um as in Examples 1 and 2, it can be confirmed that the degree of curling is measured as -0.9 and 1.2, respectively. That is, in the case of a single-sided cathode having the thickness of the coating layer as in Examples 1 and 2, it can be confirmed that the degree of curling is the smallest and the pencil hardness is excellent.

Unlike the same, when there is no coating layer as in Comparative Example 1, it can be confirmed that the degree of curling is very large as -24.8, and the pencil hardness is also very poor.

On the other hand, it can be confirmed that even when the thickness of the coating layer is 15um as in Example 6, it is superior to the case where there is no coating layer, but the degree of curling is measured as -10.4, and the pencil hardness is 1H, and in the case of a single-sided cathode having a thinner coating layer than Examples 1 and 2, the degree of curling is relatively large, and the pencil hardness is also relatively poor.

In addition, it can be confirmed that when the thickness of the coating layer is 30um and 35um, respectively, as in Examples 7 and 8, the decree of curling is measured as 6.4 and 9.9, respectively. That is, in the case of a single-sided cathode having a thicker coating layer than Examples 1 and 2, as in Examples 8 and 9, the pencil hardness is excellent, but on the contrary, curling occurs and the degree of curling is relatively large.

Therefore, it can be confirmed that it is more important to set an appropriate thickness of the coating layer.

### <Example 15> (about 4 times)

A single-sided cathode was manufactured in which a cathode active material layer having a thickness of 75 um was formed on the upper surface of the aluminum (Al) foil, which is a cathode current collector with a size of 10cm*10cm and a thickness of 15um, and a coating layer having a thickness of 30um was formed on the lower surface of the aluminum foil.

Here, the cathode active material layer was made from a cathode active material slurry obtained by using LiNi_{0.6}Mn_{0.2}Co_{0.2}O₂ as a cathode active material, carbon black as a conductive material, and polyvinylidene fluoride (PVdf) as a binder, respectively, and adding an NMP solvent to a mixture of cathode active material : conductive material : binder in a weight ratio of 96:2:2. In addition, in the single-sided cathode, the cathode active material layer was prepared by applying the cathode active material slurry onto an upper surface of an aluminum foil, followed by drying and rolling.

Further, the coating layer was made from a coating solution obtained by using pentaerythritol triacrylate (PTA) (Miwon Specialty Chemical) as a trifunctional acrylate, 2-Hydroxy Ethlyacrylate (2-HEA) (Miwon Specialty Chemical) as a monofunctional acrylate, YH-300 (Kukdo Chemical) and Celloxide 2021P (Daicel) as an epoxy resin, Darocur TPO (BASF) as a photo-initiator, SI-110L (Sanshin Chemical) as a thermal initiator, and F-477 (DIC) as an additive (surfactant), respectively, and mixing trifunctional acrylate: monofunctional acrylate: epoxy resin 1: epoxy resin 2: photo-initiator: thermal initiator: additive in a weight ratio of 12:7:25:53:1.0:1.0:1.0. In addition, in the single-sided cathode, the coating layer was prepared by applying the coating solution to the lower surface of aluminum foil, followed by UV curing (0.5 J/cm²) and heat treatment (120°C, 30 min).

### <Example 16> (about 5 times)

A single-sided positive electrode was manufactured in the same manner as in Example 15, except that in Example 15, a coating solution made by mixing trifunctional acrylate: monofunctional acrylate: epoxy-based resin 1: epoxy-based resin 2: photo-initiator: thermal initiator: additive in a weight ratio of 10:6:28:53:1.0:1.0:1.0 was used.

### <Example 17> (about 2 times)

A single-sided positive electrode was manufactured in the same manner as in Example 15, except that in Example 15, a coating solution made by mixing trifunctional acrylate: monofunctional acrylate: epoxy-based resin 1: epoxy-based resin 2: photo-initiator: thermal initiator: additive in a weight ratio of 20:14:21:42:1.0:1.0:1.0 was used.

### <Example 18> (about 3 times)

A single-sided positive electrode was manufactured in the same manner as in Example 15, except that in Example 15, a coating solution made by mixing trifunctional acrylate: monofunctional acrylate: epoxy-based resin 1: epoxy-based resin 2: photo-initiator: thermal initiator: additive in a weight ratio of 12:10:25:50:1.0:1.0:1.0 was used.

### <Example 19> (about 6 times)

A single-sided positive electrode was manufactured in the same manner as in Example 15, except that in Example 15, a coating solution made by mixing trifunctional acrylate: monofunctional acrylate: epoxy-based resin 1: epoxy-based resin 2: photo-initiator: thermal initiator: additive in a weight ratio of 9:5:27:57:0.5:1.0:0.5 was used.

### <Example 20> (about 7 times)

A single-sided positive electrode was manufactured in the same manner as in Example 15, except that in Example 15, a coating solution made by mixing trifunctional acrylate: monofunctional acrylate: epoxy-based resin 1: epoxy-based resin 2: photo-initiator: thermal initiator: additive in a weight ratio of 8:4:28:58:0.5:1.0:0.5 was used.

### <Example 21 - not according to the invention> (about 7 times)

A single-sided positive electrode was manufactured in the same manner as in Example 15, except that in Example 15, the epoxy-based resin was not used, a coating solution made by mixing trifunctional acrylate: monofunctional acrylate: photo-initiator: additive in a weight ratio of 64:32:3.0::1.0 was used, and only UV irradiation was performed without heat treatment.

### <Example 22 - not according to the invention > (about 7 times)

A single-sided positive electrode was manufactured in the same manner as in Example 15, except that in Example 15, the acrylate material was not used, a coating solution made by mixing epoxy-based resin 1: epoxy-based resin 2: thermal initiator: additives in a weight ratio of 33:65:1.0:1.0 was used, and only heat treatment was performed without UV irradiation.

### <Experimental Example 2 (Measurement of degree of curling according to the composition of the coating layer)>

For the manufactured Examples 3 to 5 and Examples 9 to 22, the degree of curling and pencil hardness according to the composition of the coating layer were measured, respectively.

For the measurement of the degree of curling, as shown in Fig. 5, the degree of bending in the (+) or (-) direction with respect to the electrode was determined by measuring the distance (D) between each corner of the single-sided cathode from the bottom surface, and then calculating the average value, and the results are shown in Tables 2 and 3 below.

**[Table 2]**

| | Composition of coating layer (weight ratio) | | | | | | Degree of curling (mm) |
|---|---|---|---|---|---|---|---|
| | Trifunctional acrylate | Monofunctional / bifunctional acrylate | | Glass fiber | Photo-initiator | Additive | |
| | TMPTA | TTEGDA | IOA | CRC-12 | Darocur TPO | RS-75 | |
| Example 3 | 50 | 27 | - | 20 | 2.9 | 0.1 | -1~1 |
| Example 4 | 60 | 22 | - | 15 | 2.9 | 0.1 | 1~3 |
| Example 5 | 60 | 17 | - | 20 | 2.9 | 0.1 | -2~3 |
| Example 9 | 60 | 30 | - | 7 | 2.9 | 0.1 | 17~18 |
| Example 10 | 50 | 32 | - | 15 | 2.9 | 0.1 | 7~9 |
| Example 11 | 70 | 15 | - | 12 | 2.9 | 0.1 | unmeasurable |
| Example 12 | 40 | - | 40 | 17 | 2.9 | 0.1 | 14~15 |
| Example 13 | 50 | 22 | - | 25 | 2.9 | 0.1 | unmeasurable |
| Example 14 | 35 | 42 | - | 20 | 2.9 | 0.1 | 16~18 |

**[Table 3]**

| | Composition of coating layer (weight ratio) | | | | | | | | Degree of curling (mm) |
|---|---|---|---|---|---|---|---|---|---|
| | Trifunctional acrylate | Monofunctional / bifunctional acrylate | Epoxy-based resin 1 | Epoxy -based resin 2 | Photo-initiator | Thermal initiator | Additive | Epoxy / acrylate ratio | |
| | PTA | 2-HEA | YH-300 | Cel20 21P | Darocur TPO | SI-110L | F-477 | | |
| Example 15 | 12 | 7 | 25 | 53 | 1 | 1 | 1 | 4 times | -3~ -1 |
| Example 16 | 10 | 6 | 28 | 53 | 1 | 1 | 1 | 5 times | -1~1 |
| Example 17 | 20 | 14 | 21 | 42 | 1 | 1 | 1 | 2 times | -20~-17 |
| Example 18 | 12 | 10 | 25 | 50 | 1 | 1 | 1 | 3 times | -12~-7 |
| Example 19 | 9 | 5 | 27 | 57 | 0.5 | 1 | 0.5 | 6 times | 7~11 |
| Example 20 | 8 | 4 | 28 | 58 | 0.5 | 1 | 0.5 | 7 times | >15 |
| Example 21 | 64 | 32 | - | - | 3 | - | 1 | - | <-25, crack |
| Example 22 | - | - | 33 | 65 | - | 1 | 1 | - | >15, delayed curing time |

Referring to Table 2, in the case of Examples 3 to 5 and 9 to 14, the compositions of respective coating layers are different while the thicknesses of the coating layer are identical to each other. At this time, in the case of a single-sided cathode having the same composition as in Examples 3 to 5, it can be confirmed that the degree of curling is measured as -1~1mm, 1~3mm, -2~3mm, - 1~1mm, respectively. That is, in the case of the single-sided cathode having the composition of the coating layer as in Examples 3 to 6, it can be confirmed that the degree of curling is relatively small. Unlike the same, in the case of a single-sided cathode having the same composition as in Examples 9 to 14, it can be confirmed that the degree of curling is measured as 17~18, 7~9 (unmeasurable), 14~15 (unmeasurable), and 16~18, respectively.

Particularly, in the case of Example 9, it can be confirmed that the content of glass fibers is relatively small and thus, the degree of curling is relatively large. Unlike the same, in the case of Example 13, it can be confirmed that the content of glass fiber is relatively high, and the coating layer is not sufficiently cured by UV, which makes it difficult to measure the degree of curling. In this case, it is judged that additional heat treatment is performed and thus, secondary curing is required.

In addition, in the case of Examples 10 and 12, it can be confirmed that the content of monofunctional/bifunctional acrylate is relatively large, and thus, the degree of curling is relatively large compared to Examples 3 to 5.

Further, in the case of Example 11, it can be confirmed that the content of the trifunctional acrylate is relatively high, the adhesion between the coating layer and the current collector is insufficient, and the degree of curling is relatively large. Unlike the same, it can be confirmed that in the case of Example 14, the content of trifunctional acrylate is relatively small, and the degree of curling is relatively large compared to Examples 3 to 5.

Accordingly, in the case of including a coating layer having the same thickness as in Examples 3 to 5 and Examples 9 to 14, the degree of curling of the single-sided cathode including the coating layer having the same composition as in Examples 3 to 5 is relatively small, which may be easier to stack together with other cathodes and anodes in an electrode assembly unit.

On the other hand, referring to Table 3, in the case of Examples 15 to 20, the compositions of respective coating layers are different from each other while the thicknesses of the coating layers are identical to each other. Specifically, the weight ratio of acrylate and epoxy resin was varied.

At this time, in the case of single-sided cathodes including the compositions of Examples 15 and 16 in which the weight ratio of acrylate and epoxy resin is 4 to 5 times, it can be confirmed that the degree of curling is measured as -3 ~ -1mm and -1 ~ 1mm, respectively. That is, in the case of a single-sided cathode having the composition of the coating layer as in Examples 15 to 16, it can be confirmed that the degree of curling is relatively small.

In addition, in the case of single-sided cathodes including the compositions of Examples 17 and 18, in which the content of the epoxy-based resin is smaller than that of the acrylate, the degree of curling is -20 ~ -17 and -12 ~ -7, respectively, confirming that the degree of curling is relatively large.

Unlike the same, in the case of single-sided cathodes including the compositions of Examples 19 and 20 in which the content of epoxy-based resin is higher than that of acrylate, the degree of curling is 7 ~ 11 and 15 or more, respectively, confirming that the degree of curling is relatively large, and there was a problem that a delay occurred in the actual curing time.

Therefore, when using acrylate and epoxy resin as the composition of the coating layer, it is preferable to mix the epoxy-based resin in a weight ratio of 4 to 5 times that of the acrylate.

Furthermore, in the case of Example 21 containing only acrylate and also performing only UV irradiation, the degree of curling is very large, and cracks occur in the coating layer. In the case of Example 22 containing only epoxy resin and thus performing only heat treatment, the degree of curling is large and the curing time is delayed, which causes a problem that the application of roll-to-roll process is difficult and process time is increased.

Although preferred embodiments of the present disclosure have been shown and described above, the scope of the present disclosure is not limited thereto, and numerous changes and modifications can be devised by those skilled in the art using the principles of the invention defined in the appended claims, which also falls within the scope of the present disclosure.

### [Description of Reference Numerals]

100: cathode
101 single-sided cathode
110: electrode current collector
150: active material layer
180: coating layer
102 double-sided cathodes
200: anode
300: separator
1000: single-sided electrode manufacturing apparatus
1100: supply roller
1200: first coating device
1300: rolling roller
1500: second coating device

### [Industrial Applicability]

According to embodiments, the present disclosure provides a single-sided electrode including a coating layer located on the other surface of an electrode current collector, wherein the thickness of the coating layer is formed smaller than the thickness of the active material layer, thereby capable of controlling curling of the single-sided electrode.

Moreover, by adjusting the composition of the coating layer, a single-sided electrode capable of more improved curl control can be provided.

Further, according to another embodiment, the present disclosure provides an electrode assembly in which the above-mentioned single-sided electrode is located at the uppermost and/or lowermost stages, thereby increasing energy density and securing cell stability.

Further, according to another embodiment, the present disclosure can provide a single-sided electrode manufacturing apparatus which forms a coating layer located on the other surface of an electrode current collector, thereby capable of controlling curling of the single-sided electrode.

Furthermore, by performing additional heat treatment as well as UV irradiation during formation of the coating layer, a single-sided electrode manufacturing apparatus capable of more improved curl control can be provided.

The effects of the present disclosure are not limited to the effects mentioned above and additional other effects not described above will be clearly understood from the description of the appended claims by those skilled in the art.

## Claims

1. A single-sided electrode (101) comprising:
an electrode current collector (110);
an active material layer (150) located on one surface of the electrode current collector (110); and
a coating layer (180) located on the other surface of the electrode current collector (110),
wherein a thickness (d2) of the coating layer (180) is smaller than a thickness (d1) of the active material layer (150),
**characterized in that**:
the coating layer (180) is made from a coating composition which comprises,
a) at least one acrylate selected from the group consisting of a monofunctional acrylate, a bifunctional acrylate, and a trifunctional acrylate, and
b) a glass fiber or an epoxy-based resin,
the coating composition further comprises an initiator and an additive, and the initiator is a photo-initiator, or a mixture of a photo-initiator and a thermal initiator.

2. The single-sided electrode (101) of claim 1, wherein:
the thickness (d2) of the coating layer (180) is 26% or more and 49% or less of the thickness of the active material layer (150).

3. The single-sided electrode (101) of claim 1, wherein:
the coating layer (180) is made from the coating composition in which
a content of the trifunctional acrylate is 41% by weight or more and 69% by weight or less based on the total weight of the coating composition,
a content of the monofunctional acrylate and the bifunctional acrylate is 16% by weight or more and 30% by weight or less based on the total weight of the coating composition, and
a content of the glass fiber is 13% by weight or more and 29% by weight or less based on the total weight of the coating composition.

4. The single-sided electrode (101) of claim 1, wherein:
the coating layer (180) is made from the coating composition in which
a content of the trifunctional acrylate is 10% by weight or more and 14% by weight or less based on the total weight of the coating composition,
a content of the monofunctional acrylate is 5% by weight or more and 7% by weight or less based on the total weight of the coating composition, and
a content of the epoxy-based resin is 4 to 5 times the total content of the trifunctional acrylate and the monofunctional acrylate.

5. The single-sided electrode (101) of claim 1_{,} wherein:
in the coating composition,
a content of the initiator is 1% by weight or more and 4% by weight or less based on the total weight of the coating composition, wherein the photo-initiator is contained in an amount of 30% by weight to 100% by weight based on the total weight of the initiator, and
a content of the additive is 0.1% by weight or more and 1% by weight or less based on the total weight of the coating composition.

6. The single-sided electrode (101) of claim 1, wherein:
a deviation of the degree of curling of the single-sided electrode (101) is 0 mm or more and 5 mm or less.

7. An electrode assembly comprising the single-sided electrode (101) of claim 1,
wherein the electrode assembly is configured such that a double-sided cathode (102), a double-sided anode (200), and a separator (300) interposed between the double-sided cathode (102) and the double-sided anode (200) are repeatedly laminated,
wherein the single-sided electrode (101) is disposed via the separator so that the double-sided anode (200) or the double-sided cathode (102) located in at least one of the uppermost and lowermost stages of the electrode assembly and the active material layer (150) of the single-sided electrode (101) face each other,
wherein the double-sided cathode (102) is configured such that a cathode active material layer is located on both surfaces of the cathode current collector, respectively, and
wherein the double-sided anode (200) is configured such that anode active material layer (250) is located on both surfaces of an anode current collector (210), respectively.

8. The electrode assembly of claim 7, wherein:
the single-sided electrode (101) has a polarity opposite to that of the double-sided anode (200) or the double-sided cathode (102) having a separator (300) interposed therebetween.

9. A method for manufacturing a single-sided electrode (101) as defined in claim 1, the method being carrying out by a single-sided electrode manufacturing apparatus (1000) comprising:
a supply roller (1100) that supplies an electrode current collector (110);
a first coating device (1200) that applies an active material composition to one surface of the electrode current collector (110) to form an active material layer (150) on one surface of the electrode current collector; and
a second coating device (1500) that applies a coating composition to the other surface of the electrode current collector (110) to form a coating layer (180) on the other surface of the electrode current collector (110).

10. The method of claim 9, wherein:
the electrode current collector (110), which is formed with the active material layer (150) supplied from the first coating device (1200), is dried.

11. The method of claim 10 , wherein the single-sided electrode manufacturing apparatus (1000) further comprises:
a pair of rolling rollers (1300) that roll the upper and lower surfaces of the electrode current collector (110) on which the dried active material layer (150) is formed.

12. The method of claim 9, wherein:
the coating layer (180) of the electrode current collector (110) supplied from the second coating device (1500) is primarily cured by irradiation of ultraviolet (UV), and wherein the irradiation dose of the ultraviolet (UV) is 0.5 J/cm² or more and 1 J/cm² or less.

13. The method of claim 12 , wherein the single-sided electrode manufacturing apparatus (1000) further comprises:
a heat treatment device in which the primarily cured coating layer (180) is subjected to additional heat treatment and secondarily cured, and wherein the additional heat treatment is performed at 100 to 150°C for 10 minutes to 30 minutes or less.

## Patentansprüche

1. Einseitige Elektrode (101), umfassend:
einen Elektroden-Stromabnehmer (110);
eine Aktivmaterialschicht (150), die sich auf einer Oberfläche des Elektroden-Stromabnehmers (110) befindet; und
eine Beschichtungsschicht (180), die sich auf der anderen Oberfläche des Elektroden-Stromabnehmers (110) befindet,
wobei eine Dicke (d2) der Beschichtungsschicht (180) kleiner ist als eine Dicke (d1) der Aktivmaterialschicht (150),
**dadurch gekennzeichnet, dass**:
die Beschichtungsschicht (180) aus einer Beschichtungszusammensetzung hergestellt ist, die Folgendes umfasst:
• a) mindestens ein Acrylat, ausgewählt aus der Gruppe bestehend aus einem monofunktionellen Acrylat, einem bifunktionellen Acrylat und einem trifunktionellen Acrylat, und
• b) eine Glasfaser oder ein Harz auf Epoxidbasis,
die Beschichtungszusammensetzung ferner einen Initiator und ein Additiv umfasst, und der Initiator ein Photoinitiator oder eine Mischung aus einem Photoinitiator und einem thermischen Initiator ist.

2. Einseitige Elektrode (101) nach Anspruch 1, wobei:
die Dicke (d2) der Beschichtungsschicht (180) 26 % oder mehr und 49 % oder weniger der Dicke der Aktivmaterialschicht (150) beträgt.

3. Einseitige Elektrode (101) nach Anspruch 1, wobei:
die Beschichtungsschicht (180) aus der Beschichtungszusammensetzung hergestellt ist, in welcher:
ein Gehalt des trifunktionellen Acrylats 41 Gew.-% oder mehr und 69 Gew.-% oder weniger, bezogen auf das Gesamtgewicht der Beschichtungszusammensetzung, beträgt,
ein Gehalt des monofunktionellen Acrylats und des bifunktionellen Acrylats 16 Gew.-% oder mehr und 30 Gew.-% oder weniger, bezogen auf das Gesamtgewicht der Beschichtungszusammensetzung, beträgt, und
ein Gehalt der Glasfaser 13 Gew.-% oder mehr und 29 Gew.-% oder weniger, bezogen auf das Gesamtgewicht der Beschichtungszusammensetzung, beträgt.

4. Einseitige Elektrode (101) nach Anspruch 1, wobei:
die Beschichtungsschicht (180) aus der Beschichtungszusammensetzung hergestellt ist, in welcher:
ein Gehalt des trifunktionellen Acrylats 10 Gew.-% oder mehr und 14 Gew.-% oder weniger, bezogen auf das Gesamtgewicht der Beschichtungszusammensetzung, beträgt,
ein Gehalt des monofunktionellen Acrylats 5 Gew.-% oder mehr und 7 Gew.-% oder weniger, bezogen auf das Gesamtgewicht der Beschichtungszusammensetzung, beträgt, und
ein Gehalt des Harzes auf Epoxidbasis das 4- bis 5-fache des Gesamtgehalts des trifunktionellen Acrylats und des monofunktionellen Acrylats beträgt.

5. Einseitige Elektrode (101) nach Anspruch 1, wobei:
in der Beschichtungszusammensetzung
ein Gehalt des Initiators 1 Gew.-% oder mehr und 4 Gew.-% oder weniger, bezogen auf das Gesamtgewicht der Beschichtungszusammensetzung, beträgt, wobei der Photoinitiator in einer Menge von 30 Gew.-% bis 100 Gew.-%, bezogen auf das Gesamtgewicht des Initiators, enthalten ist, und
ein Gehalt des Additivs 0,1 Gew.-% oder mehr und 1 Gew.-% oder weniger, bezogen auf das Gesamtgewicht der Beschichtungszusammensetzung, beträgt.

6. Einseitige Elektrode (101) nach Anspruch 1, wobei:
eine Abweichung des Wellungsgrades der einseitigen Elektrode (101) 0 mm oder mehr und 5 mm oder weniger beträgt.

7. Elektrodenanordnung, umfassend die einseitige Elektrode (101) nach Anspruch 1,
wobei die Elektrodenanordnung derart konfiguriert ist, dass eine doppelseitige Kathode (102), eine doppelseitige Anode (200) und ein zwischen der doppelseitigen Kathode (102) und der doppelseitigen Anode (200) angeordneter Separator (300) wiederholt laminiert sind,
wobei die einseitige Elektrode (101) über den Separator so angeordnet ist, dass die doppelseitige Anode (200) oder die doppelseitige Kathode (102), die sich in mindestens einer der obersten und untersten Stufen der Elektrodenanordnung befindet, und die Aktivmaterialschicht (150) der einseitigen Elektrode (101) einander zugewandt sind,
wobei die doppelseitige Kathode (102) derart konfiguriert ist, dass sich jeweils eine Kathoden-Aktivmaterialschicht auf beiden Oberflächen des Kathoden-Stromabnehmers befindet, und
wobei die doppelseitige Anode (200) derart konfiguriert ist, dass sich jeweils eine Anoden-Aktivmaterialschicht (250) auf beiden Oberflächen eines Anoden-Stromabnehmers (210) befindet.

8. Elektrodenanordnung nach Anspruch 7, wobei:
die einseitige Elektrode (101) eine Polarität aufweist, die derjenigen der doppelseitigen Anode (200) oder der doppelseitigen Kathode (102) mit einem dazwischen angeordneten Separator (300) entgegengesetzt ist.

9. Verfahren zur Herstellung einer einseitigen Elektrode (101) nach Anspruch 1, wobei das Verfahren durch eine Vorrichtung zur Herstellung einer einseitigen Elektrode (1000) durchgeführt wird, umfassend:
eine Zuführwalze (1100), die einen Elektroden-Stromabnehmer (110) zuführt;
eine erste Beschichtungsvorrichtung (1200), die eine Aktivmaterialzusammensetzung auf eine Oberfläche des Elektroden-Stromabnehmers (110) aufbringt, um eine Aktivmaterialschicht (150) auf einer Oberfläche des Elektroden-Stromabnehmers zu bilden; und
eine zweite Beschichtungsvorrichtung (1500), die eine Beschichtungszusammensetzung auf die andere Oberfläche des Elektroden-Stromabnehmers (110) aufbringt, um eine Beschichtungsschicht (180) auf der anderen Oberfläche des Elektroden-Stromabnehmers (110) zu bilden.

10. Verfahren nach Anspruch 9, wobei:
der Elektroden-Stromabnehmer (110), der mit der von der ersten Beschichtungsvorrichtung (1200) zugeführten Aktivmaterialschicht (150) ausgebildet ist, getrocknet wird.

11. Verfahren nach Anspruch 10, wobei die Vorrichtung zur Herstellung einer einseitigen Elektrode (1000) ferner umfasst:
ein Paar Walzrollen (1300), welche die obere und untere Oberfläche des Elektroden-Stromabnehmers (110) walzen, auf dem die getrocknete Aktivmaterialschicht (150) ausgebildet ist.

12. Verfahren nach Anspruch 9, wobei:
die Beschichtungsschicht (180) des von der zweiten Beschichtungsvorrichtung (1500) zugeführten Elektroden-Stromabnehmers (110) primär durch Bestrahlung mit ultraviolettem Licht (UV) gehärtet wird, und wobei die Bestrahlungsdosis des ultraviolettem LIchts (UV) 0,5 J/cm² oder mehr und 1 J/cm² oder weniger beträgt.

13. Verfahren nach Anspruch 12, wobei die Vorrichtung zur Herstellung einer einseitigen Elektrode (1000) ferner umfasst:
eine Wärmebehandlungsvorrichtung, in welcher die primär gehärtete Beschichtungsschicht (180) einer zusätzlichen Wärmebehandlung unterzogen und sekundär gehärtet wird, und wobei die zusätzliche Wärmebehandlung bei 100 bis 150 °C für 10 Minuten bis 30 Minuten oder weniger durchgeführt wird.

## Revendications

1. Électrode unilatérale (101) comprenant :
un collecteur de courant d'électrode (110) ;
une couche de matériau actif (150) située sur une surface du collecteur de courant d'électrode (110) ; et
une couche de revêtement (180) située sur l'autre surface du collecteur de courant d'électrode (110),
dans laquelle une épaisseur (d2) de la couche de revêtement (180) est inférieure à une épaisseur (d1) de la couche de matériau actif (150),
**caractérisée en ce que** :
la couche de revêtement (180) est constituée d'une composition de revêtement qui comprend :
• a) au moins un acrylate choisi dans le groupe constitué par un acrylate monofonctionnel, un acrylate bifonctionnel et un acrylate trifonctionnel, et
• b) une fibre de verre ou une résine à base d'époxy,
la composition de revêtement comprend en outre un initiateur et un additif, et l'initiateur est un photo-initiateur, ou un mélange d'un photo-initiateur et d'un initiateur thermique.

2. Électrode unilatérale (101) selon la revendication 1, dans laquelle :
l'épaisseur (d2) de la couche de revêtement (180) est de 26 % ou plus et de 49 % ou moins de l'épaisseur de la couche de matériau actif (150).

3. Électrode unilatérale (101) selon la revendication 1, dans laquelle :
la couche de revêtement (180) est constituée de la composition de revêtement dans laquelle :
une teneur en l'acrylate trifonctionnel est de 41 % en poids ou plus et de 69 % en poids ou moins par rapport au poids total de la composition de revêtement,
une teneur en l'acrylate monofonctionnel et en l'acrylate bifonctionnel est de 16 % en poids ou plus et de 30 % en poids ou moins par rapport au poids total de la composition de revêtement, et
une teneur en la fibre de verre est de 13 % en poids ou plus et de 29 % en poids ou moins par rapport au poids total de la composition de revêtement.

4. Électrode unilatérale (101) selon la revendication 1, dans laquelle :
la couche de revêtement (180) est constituée de la composition de revêtement dans laquelle :
une teneur en l'acrylate trifonctionnel est de 10 % en poids ou plus et de 14 % en poids ou moins par rapport au poids total de la composition de revêtement,
une teneur en l'acrylate monofonctionnel est de 5 % en poids ou plus et de 7 % en poids ou moins par rapport au poids total de la composition de revêtement, et
une teneur en la résine à base d'époxy est de 4 à 5 fois la teneur totale en l'acrylate trifonctionnel et l'acrylate monofonctionnel.

5. Électrode unilatérale (101) selon la revendication 1, dans laquelle :
dans la composition de revêtement,
une teneur en l'initiateur est de 1 % en poids ou plus et de 4 % en poids ou moins par rapport au poids total de la composition de revêtement, dans laquelle le photo-initiateur est contenu en une quantité de 30 % en poids à 100 % en poids par rapport au poids total de l'initiateur, et
une teneur en l'additif est de 0,1 % en poids ou plus et de 1 % en poids ou moins par rapport au poids total de la composition de revêtement.

6. Électrode unilatérale (101) selon la revendication 1, dans laquelle :
un écart du degré de gondolage de l'électrode unilatérale (101) est de 0 mm ou plus et de 5 mm ou moins.

7. Ensemble d'électrodes comprenant l'électrode unilatérale (101) selon la revendication 1,
dans lequel l'ensemble d'électrodes est configuré de sorte qu'une cathode double face (102), une anode double face (200), et un séparateur (300) interposé entre la cathode double face (102) et l'anode double face (200) soient stratifiés de manière répétée, dans lequel l'électrode unilatérale (101) est disposée via le séparateur de sorte que l'anode double face (200) ou la cathode double face (102) située dans au moins l'un des étages le plus supérieur et le plus inférieur de l'ensemble d'électrodes et la couche de matériau actif (150) de l'électrode unilatérale (101) se font face,
dans lequel la cathode double face (102) est configurée de sorte qu'une couche de matériau actif de cathode soit située sur les deux surfaces du collecteur de courant de cathode, respectivement, et
dans lequel l'anode double face (200) est configurée de sorte qu'une couche de matériau actif d'anode (250) soit située sur les deux surfaces d'un collecteur de courant d'anode (210), respectivement.

8. Ensemble d'électrodes selon la revendication 7, dans lequel :
l'électrode unilatérale (101) a une polarité opposée à celle de l'anode double face (200) ou de la cathode double face (102) ayant un séparateur (300) interposé entre elles.

9. Procédé de fabrication d'une électrode unilatérale (101) telle que définie dans la revendication 1, le procédé étant mis en œuvre par un appareil de fabrication d'électrode unilatérale (1000) comprenant :
un rouleau d'alimentation (1100) qui alimente un collecteur de courant d'électrode (110) ;
un premier dispositif de revêtement (1200) qui applique une composition de matériau actif sur une surface du collecteur de courant d'électrode (110) pour former une couche de matériau actif (150) sur une surface du collecteur de courant d'électrode ; et
un second dispositif de revêtement (1500) qui applique une composition de revêtement sur l'autre surface du collecteur de courant d'électrode (110) pour former une couche de revêtement (180) sur l'autre surface du collecteur de courant d'électrode (110).

10. Procédé selon la revendication 9, dans lequel :
le collecteur de courant d'électrode (110), qui est formé avec la couche de matériau actif (150) fournie à partir du premier dispositif de revêtement (1200), est séché.

11. Procédé selon la revendication 10, dans lequel l'appareil de fabrication d'électrode unilatérale (1000) comprend en outre :
une paire de rouleaux de laminage (1300) qui laminent les surfaces supérieure et inférieure du collecteur de courant d'électrode (110) sur lequel la couche de matériau actif séchée (150) est formée.

12. Procédé selon la revendication 9, dans lequel :
la couche de revêtement (180) du collecteur de courant d'électrode (110) fournie à partir du second dispositif de revêtement (1500) est principalement durcie par irradiation d'ultraviolets (UV), et dans lequel la dose d'irradiation des ultraviolets (UV) est de 0,5 J/cm² ou plus et de 1 J/cm² ou moins.

13. Procédé selon la revendication 12, dans lequel l'appareil de fabrication d'électrode unilatérale (1000) comprend en outre :
un dispositif de traitement thermique dans lequel la couche de revêtement principalement durcie (180) est soumise à un traitement thermique supplémentaire et est secondairement durcie, et dans lequel le traitement thermique supplémentaire est effectué de 100 à 150 °C pendant 10 minutes à 30 minutes ou moins.
